# FASCICULE DE BREVET EUROPEEN

(11) **EP 4 505 237 B1**
(45) Date de publication et mention de la délivrance du brevet: **19.08.2026**
(21) Numéro de dépôt: 23716307.6
(22) Date de dépôt: 31.03.2023
(51) Int. Cl.: G02B 27/00

(54) **PROCÉDÉ DE CORRECTION D'ABERRATIONS OPTIQUES INTRODUITES PAR UN OBJECTIF OPTIQUE DANS UNE IMAGE, APPAREIL ET SYSTÈME METTANT EN OEUVRE UN TEL PROCÉDÉ**
VERFAHREN ZUR KORREKTUR VON OPTISCHEN ABERRATIONEN, DIE DURCH EINE OPTISCHE LINSE IN EINEM BILD EINGEFÜHRT WERDEN, VORRICHTUNG UND SYSTEM ZUR DURCHFÜHRUNG DIESES VERFAHRENS
METHOD FOR CORRECTING OPTICAL ABERRATIONS INTRODUCED BY AN OPTICAL LENS IN AN IMAGE, APPARATUS AND SYSTEM IMPLEMENTING SUCH A METHOD

(30) Priorité: 01.04.2022 FR 2202987
(43) Date de publication de la demande: 12.02.2025
(73) Titulaire: Fogale Nanotech, 30900 Nîmes (FR)
(72) Inventeur: LEGROS, Eric, 30900 NÎMES (FR); PETITGRAND, Sylvain, 30132 CAISSARGUES (FR)
(74) Mandataire: IPAZ
(86) Numéro de dépôt international: PCT/EP2023/058490
(87) Numéro de publication internationale: WO 2023/187170

(56) Documents cités:
- EP-A1- 2 164 268
- US-A1- 2011 242 372

## Description

La présente invention concerne un procédé de correction d'aberrations optiques introduites par un objectif optique dans une image captée avec ledit objectif optique. Elle concerne également un système ainsi qu'un appareil mettant en œuvre un tel procédé.

Le domaine de l'invention est le domaine de la correction d'images captées avec un objectif optique, en vue de la correction d'aberrations optiques dues audit objectif optique.

### État de la technique

Les objectifs optiques sont utilisés dans divers appareils, tels que par exemple des caméras, des appareils photos, des Smartphones, etc. pour imager une scène.

Généralement, un objectif optique est constitué d'un empilement d'éléments optiques, tels que des lentilles optiques, séparées entre-elles par un espace vide, également appelé « air gap » en anglais, ou par une entretoise, également appelé « spacer » en anglais. Elles sont généralement assemblées via un dispositif que l'on appelle fût ou barillet.

Pour réaliser une image, l'objectif optique coopère avec un capteur photosensible, tel qu'un capteur CMOS ou CCD. Le plan moyen du capteur d'image est appelé le plan d'image et le capteur comprend une multitude de pixels. L'ensemble comprenant l'objectif optique et le capteur d'image est généralement appelé « module optique » ou « module caméra ».

La tendance à la miniaturisation des modules caméra montés dans les appareils électroniques, tels que les smartphones, diminue les tolérances sur la fabrication des composants et notamment sur celles de l'objectif optique et de lentilles qui le composent. Les défauts de fabrication peuvent ainsi apparaitre sous la forme de défauts de l'image obtenue sur le capteur d'image. Par exemple, des aberrations optiques peuvent se traduire par un flou des images. La luminosité d'un pixel d'une image originale est déformée et modifie la luminosité d'un pixel adjacent de l'image capturée.

Un but de la présente invention est de remédier à au moins un des inconvénients précités.

Un autre but de l'invention est de proposer une solution permettant une correction des aberrations optiques introduites par un objectif optique dans une image captée par ledit objectif. Le document US 2011/242372 A1 est pertinent pour la présente demande.

### Exposé de l'invention

L'invention propose d'atteindre au moins l'un des buts précités par un procédé d'acquisition d'image avec un appareil comprenant un module caméra comportant un objectif optique associé à un capteur d'image, ledit procédé comprenant au moins une itération d'une phase d'acquisition d'une image par ledit appareil comprenant les étapes suivantes :
- captation d'une image avec ledit module caméra ; et
- correction de ladite image captée en fonction d'au moins une matrice de correction calculée, directement ou indirectement, à partir d'au moins une matrice, dite matrice d'aberration, déterminée pour ledit objectif optique, et représentative d'aberrations optiques introduites par ledit objectif optique dans une image.

Ainsi, l'invention propose de réaliser une correction d'une image captée avec un objectif optique au sein même de l'appareil comprenant ledit objectif optique. Ainsi, la correction de l'image peut s'adapter à chaque appareil individuellement et peut être réalisée à la volée au moment de la prise de l'image par l'appareil. La solution proposée par la présente invention est donc plus personnalisable et plus évolutive.

Pour ce faire, l'invention propose d'utiliser une matrice de correction calculée en fonction d'au moins une matrice d'aberration préalablement déterminée pour l'objectif optique utilisé. La détermination de la matrice de correction peut être réalisée directement à partir de la matrice de d'aberration, ou indirectement, par exemple à partir d'une matrice de noyau d'aberration ou d'une matrice noyau de correction préalablement calculées, comme il sera décrit plus loin.

Par « aberration optique », on entend notamment un flou optique ou une distorsion optique. Un flou optique se traduit généralement par un étalement d'un point lumineux. Une distorsion se traduit généralement par un déplacement du point optique.

Les éléments optiques composant un objectif optique sont empilés suivant une direction d'empilement, également appelé axe Z dans la suite, ou encore l'axe de l'objectif optique. Le plan perpendiculaire à l'axe Z, c'est-à-dire le plan selon lequel chaque élément optique s'étend, est appelé le plan X-Y dans la suite.

Par « paramètre géométrique d'une interface optique », on entend, par exemple, et sans perte de généralité :
- une position de l'interface optique au sein de l'objectif, dans l'axe Z ;
- une position d'un APEX de l'interface optique, en particulier dans le plan X-Y et/ou
- une position d'un APEX de l'interface optique, en particulier selon l'axe Z,
- une inclinaison (TIP et/ou TILT) de ladite interface optique par rapport à l'axe Z,
- un décentrement d'une interface optique, ou d'un élément optique, par rapport à l'axe Z, dans le plan X-Y.

Dans la présente demande, par « interface optique enterrée » d'un objectif optique, on entend une interface au sein de l'objectif optique qui n'est visible, ou accessible, que par l'intermédiaire d'au moins une autre interface optique de l'objectif. L'au moins une autre interface optique au travers de laquelle l'interface enterrée est visible peut être une interface optique d'un même élément optique, ou une interface optique d'un autre élément optique que l'interface enterrée.

Par « pixel » on entend un motif élémentaire d'une image comportant par exemple des valeurs de couleurs R, G, B, ou de luminosité et de chrominance, donc un élément qui forme un 'point' d'une image.

Dans le présent document, une région du capteur d'image centrée sur les coordonnées (Xᵢ,Yᵢ), dans le plan (X,Y), peut être désignée par R(Xᵢ,Yᵢ), ou Rᵢ.

Dans le présent document, MA désigne la matrice d'aberration pour l'ensemble de l'objectif optique. MAᵢ, ou MAᵢ(Xᵢ,Yᵢ) désigne la matrice d'aberration pour la région Rᵢ de l'objectif. La matrice d'aberration MA peut être obtenue par concaténation ou addition des matrices d'aberration MAᵢ pour l'ensemble des régions du capteur d'image.

La, ou chaque, matrice de correction est désignée par les lettres MC.

Le capteur d'image peut être tout type de capteur photosensible, tel qu'un capteur CMOS ou un capteur CCD, etc.

Suivant des modes de réalisation particulièrement avantageux, la phase d'acquisition d'une image peut comprendre une étape de détermination d'une distance, notée DOC, entre l'objectif optique et le capteur d'image, l'au moins une matrice de correction étant fonction de ladite distance DOC.

En effet, le procédé selon l'invention permet de prendre en compte les aberrations optiques introduites par l'objectif optique dans une image, lorsque la distance entre l'objectif optique et le plan d'image, c'est-à-dire le plan du capteur d'image, est changeante, et corriger ces aberrations avec des matrices de correction déterminées en fonction de cette distance DOC. En effet, les inventeurs ont remarqué que, pour un objectif donné, les aberrations optiques introduites par ledit objectif peuvent varier en fonction de la distance entre ledit objectif et le plan d'image.

Le plan d'image peut être le plan du capteur d'image.

Ainsi, pour chaque distance DOCⱼ, avec j≥2, une matrice d'aberration MAᵢ correspondant à l'ensemble du capteur d'image peut être déterminée. Alternativement, pour chaque distance DOCⱼ, plusieurs matrices d'aberration MAᵢⱼ, peuvent être déterminées, pour chaque région du capteur d'image. La matrice d'aberration MAⱼ, ou chaque matrice d'aberration MAᵢⱼ, peut ensuite être utilisée pour déduire directement ou indirectement une matrice de correction MCⱼ pour l'ensemble du capteur, ou des matrices de corrections MCᵢⱼ pour chaque région Rᵢ du capteur d'image.

La, chaque, distance DOC peut par exemple être mesurée par un capteur de distance, tel qu'un capteur optique, un capteur magnétique, un capteur capacitif, etc.

La, chaque, distance DOC peut par exemple être calculée à partir d'informations fournies par un mécanisme d'ajustement de focalisation modifiant, ou contrôlant, la distance entre l'objectif optique et le capteur d'image.

Suivant des modes de réalisation particulièrement avantageux, la phase d'acquisition d'une image peut comprendre une étape de détermination d'une distance, DOS, entre l'objectif optique et la scène, l'au moins une matrice de correction étant fonction de ladite distance DOS.

Ainsi, le procédé selon l'invention permet de prendre en compte les aberrations optiques introduites par l'objectif optique dans une image, lorsque la distance entre l'objectif optique et la scène imagée est changeante. En effet, les inventeurs ont remarqué que, pour un objectif donné, les aberrations optiques introduites par ledit objectif optique peuvent varier en fonction de la distance entre ledit objectif et la scène, ou chaque partie de la scène.

Ainsi, pour chaque distance DOSₖ, avec k≥2, une matrice d'aberration MAₖ correspondant à l'ensemble du capteur d'image peut être déterminée. Alternativement, pour chaque distance DOSₖ, plusieurs matrices d'aberration MAᵢₖ, peuvent être déterminées, pour chaque région du capteur d'image. La matrice d'aberration MAₖ, ou chaque matrice d'aberration MAᵢₖ, peut ensuite être utilisée pour déduire directement ou indirectement une matrice de correction MCₖ pour l'ensemble du capteur, ou des matrices de corrections MCᵢₖ pour chaque région Rᵢ du capteur d'image.

La, ou chaque distance, DOS peut par exemple être mesurée par un LIDAR, une caméra temps de vol, un capteur ultrason, une analyse d'image texturée, etc.

Une seule distance DOS peut être mesurée pour l'objectif optique. Alternativement, des distances DOS peuvent être mesurées pour différentes régions Rᵢ du capteur optique, pour une même scène donnée. En effet, une scène imagée peut comprendre plusieurs objets se trouvant à des distances DOS différentes. Dans ce cas, une distance DOSᵢₖ est déterminée pour chaque région Rᵢ du capteur, et la matrice de correction est sélectionnée individuellement pour chaque régions Rᵢ en fonction de la distance DOSᵢₖ mesurée pour cette région Rᵢ du capteur.

Suivant des modes de réalisation, une image peut être corrigée en fonction de plusieurs matrices de correction, chacune sélectionnée en fonction :
- d'une région Rᵢ du capteur d'image,
- la distance DOCj entre le capteur d'image et l'objectif, et
- la distance DOSₖ entre l'objectif optique et la scène dans ladite région Rᵢ.
Cette matrice de correction peut être notée MCᵢⱼₖ.

Cela implique de déterminer, pour chaque région Rᵢ du capteur, plusieurs matrices d'aberration MAᵢⱼₖ correspondant chacune à une distance DOCⱼ, et à une distance DOSₖ dans ladite région Rᵢ, avec :
- i=1,...,I et I≥2,
- j=1,...,1 et J≥2
- k=1,...,I et K≥2

Par exemple, en prenant dix (10) régions du capteur d'image, 3 distances DOCⱼ, et 5 distances DOSₖ pour chaque région du capteur d'image, alors il peut être déterminé 15 matrices d'aberration pour chaque région du capteur d'image, et en tout 150 matrices d'aberration pour le capteur d'image.

Dans la suite, pour la région Rᵢ du capteur, la distance DOCⱼ et la distance DOSₖ :
- MAᵢⱼₖ est la matrice d'aberration, et
- MCᵢⱼₖ est la matrice de correction.
Bien entendu, lorsque la distance DOC et/ou la distance DOS ne sont pas variables, alors les notations MAᵢⱼₖ et MCᵢⱼₖ n'impliquent pas forcément que ces distances sont variables.

Suivant des modes de réalisation, le procédé selon l'invention peut comprendre une étape de calcul de l'au moins une matrice de correction en dehors de l'appareil d'imagerie. Dans ce cas, la matrice de correction peut dans certains cas être mémorisée dans ledit appareil d'imagerie.

Alternativement, le procédé selon l'invention peut comprendre une étape de calcul de l'au moins une matrice de correction au sein dudit appareil.

Dans ce cas, le calcul de la matrice de correction utilisée pour la correction d'image est réalisé par une unité de calcul de l'appareil d'imagerie.

Suivant des modes de réalisation, l'étape de calcul de l'au moins une matrice de correction peut être réalisée lors de la phase d'acquisition de sorte que ladite au moins matrice de correction est calculée à la volée pour chaque image captée.

Ainsi, pour chaque acquisition d'image, l'au moins une matrice de correction est calculée en prenant en compte les conditions dans lesquelles l'image est acquise, de sorte que la correction de l'image est personnalisée pour chaque image. La correction de l'image est donc plus précise. De plus, dans ce mode de réalisation, il est possible de ne calculer que les matrices de correction utilisées pour la correction de l'image acquise. Par exemple, il est possible de ne calculer que les matrices de correction pour la distance DOC, et/ou la ou les distances DOS déterminées pour cette image.

Suivant un mode de réalisation, l'étape de calcul de l'au moins une matrice de correction peut être réalisée préalablement à la phase d'acquisition de sorte que ladite étape de calcul est commune à plusieurs itérations de la phase d'acquisition d'image.

Dans ce cas, la correction de l'image peut être réalisée de manière plus rapide car il n'est pas nécessaire de calculer à la volée l'au moins une matrice de correction. Dans ce mode de réalisation, toutes les matrices de correction correspondant aux configurations, et en particulier aux distances DOC et DOS susceptibles d'être utilisées pour les images à corriger, peuvent être calculées et mémorisées au sein de l'appareil dans une base de données. Puis, à chaque itération de la phase d'acquisition, l'au moins une matrice de correction correspondant à la configuration d'acquisition de l'image lors de cette phase d'acquisition, peut être sélectionnée, en particulier en fonction de la distance DOC et/ou de l'au moins une distance DOS, pour réaliser la correction de l'image acquise lors de ladite phase d'acquisition.

Au moins une matrice de correction peut être calculée à partir d'au moins une matrice d'aberration.

En particulier, chaque matrice de correction peut être calculée à partir d'une matrice d'aberration. Par exemple, la matrice de correction MCᵢⱼₖ peut être calculée à partir de la matrice d'aberration MAᵢⱼₖ.

Au moins une matrice de correction, peut être calculée en inversant la matrice d'aberration correspondante, ce qui peut se faire par exemple par des calculs dans le domaine de fréquences spatiales.

Suivant des exemples de réalisation, au moins une matrice de correction peut être obtenue par la relation : ${MC}_{ijk} = {TF}^{- 1} \left\{\frac{TF \left\{{G}_{0}\right\}}{TF \left\{{MA}_{ijk}\right\}}\right\}$ où G₀ est une fonction représentant la forme de fonction de dispersion de point à obtenir après correction. Il peut s'agir d'une fonction s'approchant d'une fonction de Dirac en 2 dimensions, c'est-à-dire valant 1 au centre, et quasiment 0 autour. En notant MTOBSᵢⱼₖ, la matrice d'un faisceau lumineux test telle qu'observé pour la mesure d'une matrice d'aberration, et MT sa forme native telle qu'elle est en réalité lors de son émission, la matrice de correction MCᵢⱼₖ peut être calculée de la façon suivante : ${MC}_{ijk} = {TF}^{- 1} \left\{\frac{TF \left\{{G}_{0}\right\} . TF \left\{{MT}_{ijk}\right\}}{TF \left\{{MTOBS}_{ijk}\right\}}\right\}$ Dans une forme simplifiée, il est possible de supposer que TF(G0) = 1, la fonction constante qui renvoie 1 avec une phase nulle à toutes les fréquences, ce qui s'écrit : ${MC}_{ijk} = {TF}^{- 1} \left\{\frac{TF \left\{{MT}_{ijk}\right\}}{TF \left\{{MTOBS}_{ijk}\right\}}\right\}$ avec :
- TF l'opérateur de transformée de Fourier (en 2D) ;
- TF⁻¹ l'opérateur inverse de transformée de Fourier (en 2D) ;
- MCᵢⱼₖ matrice de correction pour la région Rᵢ du capteur d'image, à la distance objectif-capteur DOCⱼ, et à la distance objectif-scène DOSₖ pour ladite région Rᵢ ;
- MAᵢⱼₖ la matrice d'aberration obtenue pour la région Rᵢ du capteur d'image et les distances DOCⱼ et DOSₖ ; et
- MTᵢⱼₖ la matrice du faisceau lumineux de test, c'est-à-dire la matrice décrivant le faisceau lumineux de test utilisé pour mesurer la matrice d'aberration MAᵢⱼₖ ; et
- MTOBSᵢⱼₖ la matrice d'illumination observée dans le plan du capteur par rapport à la matrice de test MTᵢⱼₖ présentée en entrée de l'objectif optique.

Au moins une matrice de correction peut être calculée à partir d'au moins une matrice noyau d'aberration, comprenant des coefficients permettant de déduire ladite au moins une matrice d'aberration, et préalablement calculée.

L'utilisation d'une matrice noyau d'aberration permet d'éviter de mémoriser toutes les matrices d'aberration utilisées pour la détermination des matrices de corrections, et donc de diminuer l'espace mémoire utilisée pour la mémorisation des matrices d'aberration.

Dans ce cas, plusieurs matrices d'aberration peuvent déterminées, avant la phase de correction. Ensuite, à partir de ces matrices, une matrice commune peut être identifiée. Cette matrice commune, dite matrice noyau d'aberration, peut-être mémorisée à la place de la multitude de matrices d'aberration, en relation avec une ou plusieurs relations, pour permettre le calcul de chaque matrice d'aberration, cette dernière étant ensuite utilisée pour déterminer une matrice de correction telle que décrit plus loin.

La matrice noyau d'aberration peut, suivant un exemple de réalisation nullement limitatif, être déterminée de la manière suivante, à partir des matrices d'aberration.

Dans un premier temps, on établit une base de fonctions FA permettant de décrire les valeurs des coefficients des matrices d'aberrations en fonction des positions (X,Y) dans le champ du capteur d'image, telle que : $MA \left(X, Y\right) = {\sum }_{l} {αA}_{l} \left(X, Y\right) {FA}_{l} \left(X, Y\right) + E \left(X, Y\right) ,$ où
- I balaye la base des fonctions FA, avec 1≤I≤L, et L≥1.
- le terme E(X,Y) modélise les écarts entre la combinaison des fonctions FA_{I} et MA.

La base FA peut de préférence être choisie de façon à être suffisamment large pour que le terme E(X,Y) garde un effet négligeable, voire nul. Ces fonctions peuvent être orthogonales entre elles au sens d'un produit scalaire, mais pas nécessairement. Par exemple la base de fonctions FA_{I} peut être la base de fonctions des polynômes de Zernike. Pour obtenir les fonctions αA_{I}(X,Y), il suffit d'utiliser une méthode connue de l'état de l'art telle qu'une projection de MA(X,Y) sur les FA_{I}(X,Y), au sens d'un produit scalaire, et d'appliquer le produit matriciel qui convient pour tenir compte de leur non orthogonalité, le cas échant, pour obtenir les fonctions αA_{I}(X,Y). L'établissement d'un précurseur de noyau d'aberration (PNA) revient à rechercher un modèle paramétrique des fonctions αA_{I}(X,Y), tel que par exemple une expression polynomiale représente αA_{I}(X,Y), par exemple, si I ∈ {1, 2}, telle que αA₁(X,Y) = a₀₁.((X-x₀₁)²+(Y-y₀₁)²) et αA₂(X,Y) = a₀₂.((X-x₀₂)*(Y-y₀₂)) +z₀₂. Le modèle représentant les αA_{I}(X,Y), ici αA₁(X,Y) et αA₂(X,Y), est alors la table des valeurs ((a₀₁, x₀₁, y₀₁) ; (a₀₂, x₀₂, y₀₂, z₀₂)) dans cet exemple. Nous pouvons appeler ce jeu de coefficients matrice précurseur noyau d'aberrations dit PNA (ici qui peut être une matrice de 1 ligne x 7 colonnes, ou 2 lignes par 4 colonnes avec un coefficient nul ajouté à la 1ere ligne). Comme les fonctions FA_{I}() sont choisies de façon à modéliser au mieux les modes des aberrations obtenues, le modèle paramétrique qui représente les fonctions αAl(X,Y) en fonction des paramètres géométriques contient significativement moins de coefficients que la représentation numérique des fonctions FA_{I}(X,Y). Ici par exemple, il contient 8 coefficients à la place des par exemple 16 millions de coefficients qu'il aurait fallu pour représenter les fonctions d'aberration représentées par 4 x 4 coefficients sur un champ X, Y de 1000x1000 positions. Il reste une dernière étape pour obtenir la matrice d'aberration qui est de représenter les évolutions des coefficients de PNA en fonction des paramètres distance objectif capteur et objectif scène DOC et DOS, ce qui fait à nouveau un jeu de plusieurs paramètres intervenant dans des fonctions modélisant les valeurs de PNA en fonction de DOC et de DOS. C'est ce dernier jeu de coefficients qui peut, de manière avantageuse, constituer la matrice noyau d'aberration.

Suivant un autre exemple de réalisation, la matrice noyau d'aberration peut être une table de matrices contenant les coefficients de PNA, ou directement le PNA pour plusieurs jeux de paramètres DOC et DOS. L'essentiel est de pouvoir retrouver les matrices d'aberration de l'objectif à partir des paramètres géométriques, de préférence en mémorisant moins de données que ces matrices d'aberration en représentent.

La matrice noyau d'aberration peut être déterminée dans l'appareil réalisant la captation de l'image, ou hors de l'appareil réalisant la captation de l'image.

Par exemple la base de fonctions FA_{I} peut être la base de fonctions des polynômes de Zernike.

Au moins une matrice de correction peut être calculée à partir d'au moins une matrice noyau de correction, comprenant des coefficients permettant de déduire ladite au moins une matrice de correction, et préalablement calculée.

L'utilisation d'une matrice noyau de correction permet d'éviter de mémoriser toutes les matrices de correction utilisées pour corriger chaque image captée lors de chaque itération de la phase de correction, et donc diminuer l'espace mémoire utilisée pour la mémorisation des matrices de correction.

La matrice noyau de correction peut être déterminée de manière suivante. Plusieurs matrices de corrections peuvent être déterminées à partir de plusieurs matrices d'aberration ou à partir d'une matrice noyau d'aberration. Ensuite, à partir de ces matrices de correction, une matrice de correction commune, notée MC, peut être identifiée. Cette matrice de correction commune peut-être mémorisée à la place de la multitude de matrices de correction, en association avec une ou plusieurs relations, pour permettre le calcul de chaque matrice de correction.

La détermination de la matrice noyau de correction peut être déterminée d'une manière similaire à celle décrite plus haut pour la matrice noyau d'aberration en utilisation la même base de fonctions FA_{I}, ou une autre base de fonctions qui serait appropriée.

La matrice noyau de correction peut être déterminée dans l'appareil réalisant la captation de l'image ou hors de l'appareil réalisant la captation de l'image.

Le procédé selon l'invention peut en outre comprendre, préalablement à la première itération de la phase d'acquisition, une phase de caractérisation comprenant une détermination de l'au moins une, et en particulier de chaque, matrice d'aberration.

La phase de caractérisation peut généralement être réalisée hors de l'appareil réalisant l'acquisition de l'image. Dans ce cas, la phase de caractérisation est réalisée avec l'objectif optique, ou le capteur d'image, qui n'est pas encore monté dans l'appareil.

Bien entendu, suivant des modes de réalisation alternatifs, la phase de caractérisation peut aussi être réalisée au sein de l'appareil, en particulier avec l'objectif optique, ou le capteur d'image, monté dans l'appareil.

La phase de caractérisation peut comprendre une détermination de :
- plusieurs matrices d'aberration pour plusieurs régions Rᵢ du capteur d'image ;
- de plusieurs matrices d'aberration pour plusieurs valeurs de distance DOCᵢ ; et/ou
- de plusieurs matrices d'aberration pour plusieurs valeurs de distance DOSⱼ.

En effet, une matrice d'aberration MA peut être déterminée pour tout le capteur d'image. Alternativement, des matrices d'aberration MAᵢ peuvent être déterminées, chacune pour une région Rᵢ du capteur d'image, avec i=1,...,I et I≥2.

Alternativement, ou en plus, des matrices d'aberration MAⱼ peuvent être déterminées, chacune pour une distance objectif-capteur DOCᵢ, avec j=1,...,J et J≥2.

Alternativement, ou en plus, des matrices d'aberration MAₖ peuvent être déterminées, chacune pour une distance objectif-scène DOSₖ, avec k=1,...,K et K≥2.

Suivant une combinaison non-limitative, plusieurs matrices d'aberration MAᵢⱼₖ peuvent être déterminées, chacune pour une région Rᵢ, une distance DOCⱼ, et une distance objectif-scène DOSₖ dans ladite région Rᵢ.

Suivant une autre combinaison non-limitative, plusieurs matrices d'aberration MAᵢₖ peuvent être déterminées, chacune pour une région Rᵢ, et une distance objectif-scène DOSₖ dans ladite région Rᵢ. Dans ce cas, la matrice d'aberration, et donc la correction de l'image, ne prend pas en compte la distance objectif-capteur d'image DOC.

Suivant des modes de réalisation, au moins une matrice d'aberration peut être déterminée par mesure optique, sur l'objectif optique réel, avec un appareil de mesure optique.

L'appareil de mesure optique peut comprendre un appareil de mesure du MTF (pour « Modulation Transfer Function » en anglais, et FTM pour « Fonction de Transfert de Modulation » en français), ou de OTF (« Optical Transfer Function » en anglais, et FTO pour « Fonction de Transfert Optique » en français), ou un appareil de mesure de PSF (pour « Point Spread Function » en anglais, ou « Fonction d'étalement du point » en français), ou encore un appareil de mesure de front d'onde. De tels appareil sont bien connus de l'Homme du métier et ne seront pas décrits plus en détail ici par soucis de concision. Ils comprennent généralement une source de lumière, une mire ou motif à observer, un capteur d'image (ou plusieurs) et une unité de calcul.

Alternativement, ou en plus, au moins une matrice d'aberration peut être déterminée par simulation dans un simulateur numérique sur un modèle numérique de l'objectif optique.

Dans ce cas, l'objectif optique et le capteur d'image sont modélisés dans un logiciel, tel que le logiciel ZEMAX^{®}, dans lequel il est possible de simuler les fonctions MTF, OTF ou PSF, ou encore de front d'onde, en simulant l'émission et la propagation d'un faisceau lumineux de test et en mesurant l'illumination reçue sur le capteur d'image.

Quel que soit le mode de réalisation, par mesure sur l'objectif optique ou par simulation sur un modèle numérique de l'objectif optique, une matrice d'aberration peut être déterminée de la manière suivante.

L'objectif optique associé au capteur d'image est illuminé par un faisceau lumineux de test, puis l'illumination reçue au niveau du capteur d'image est mesurée. Cette illumination reçue au niveau du capteur comporte l'information des aberrations optiques introduites par l'objectif optique dans chaque image captée.

La matrice d'aberration peut être obtenue par région du capteur d'image, correspondant chacune à un ou plusieurs pixels sur ledit capteur d'image. Dans ce cas, un motif d'illumination est présenté en face de l'objectif optique, tel que par exemple un motif de damier alternant des motifs blancs et des motifs noirs, puis l'illumination reçue au niveau du capteur est mesurée. Cette illumination reçue au niveau du capteur comporte l'information des aberrations optiques introduites par l'objectif optique dans chaque image captée.

Une transformation des images captées peut être nécessaire afin d'obtenir par exemple la fonction d'étalement de point PSF qui correspondrait à par exemple un faisceau de test provenant d'un seul point lumineux illuminant l'objectif, déplacé dans plusieurs régions du champ visible par l'objectif pour obtenir les PSF de plusieurs régions du capteur. Mais si la mesure, respectivement la simulation, permet d'illuminer l'objectif optique à partir d'un seul point déplaçable, ces transformations peuvent généralement être omises.

Suivant des exemples de réalisation non limitatifs, au moins une, en particulier chaque, matrice d'aberration peut être :
- une matrice PSF de valeurs d'une fonction d'étalement du point (« Point Spread Function » ou « PSF » en anglais), et/ou
- une matrice OTF de valeurs d'une fonction de transfert optique (« Optical Tranfert Fuction » ou « OTF » en anglais), et/ou
- une matrice de valeurs obtenues par analyse de front d'onde.

Bien entendu, d'autres types de matrices d'aberration peuvent être utilisés et l'invention n'est pas limitée à un type particulier de matrice d'aberration.

Le procédé selon l'invention peut comprendre une étape de calcul d'une matrice, dite matrice noyau d'aberration, comprenant des coefficients permettant de déduire au moins une matrice d'aberration.

La matrice noyau d'aberration peut être déterminée telle que décrit plus haut, au sein ou hors de l'appareil captant l'image à corriger.

Le procédé selon l'invention peut en outre comprendre une étape de calcul d'une matrice, dite matrice noyau de correction, comprenant des coefficients permettant de déduire au moins une matrice de correction.

La matrice noyau de correction peut être déterminée telle que décrit plus haut, au sein ou hors de l'appareil captant l'image à corriger.

Suivant un autre aspect de la présente invention, il est proposé un système d'acquisition d'image avec un appareil comprenant un module caméra comportant un objectif optique associé à un capteur d'image, ledit système comprenant :
- un dispositif de caractérisation dudit objectif optique pour déterminer au moins une matrice, dite matrice d'aberration, représentative d'aberrations optiques introduites par ledit objectif optique dans une image captée par ledit module caméra,
- ledit module caméra pour capter une image, et
- une unité de calcul dans ledit appareil ;
configurés pour mettre en œuvre le procédé selon l'invention d'acquisition d'image(s).

Le système selon l'invention peut comprendre, en termes de moyen(s) matériel(s) et/ou logiciel(s), une combinaison quelconque des caractéristiques optionnelles énoncées plus haut pour le procédé selon l'invention et qui ne sont pas reprises ici par soucis de concision.

Le dispositif de caractérisation peut comprendre un appareil de mesure optique pour mesurer au moins une matrice d'aberration sur l'objectif optique réel. Alternativement, le dispositif de caractérisation peut comprendre un simulateur numérique pour déterminer au moins une matrice d'aberration par simulation sur un modèle numérique de l'objectif optique.

L'unité de calcul peut être un processeur, un calculateur ou toute puce électronique programmable. L'unité de calcul peut être un processeur ou une carte graphique de l'appareil réalisant la captation de l'image.

Suivant un autre aspect de la présente invention, il est proposé un appareil d'acquisition d'une image comprenant :
- un module caméra comprenant un objectif optique associé à un capteur d'image, et
- une unité de calcul ;
configurés pour mettre en œuvre les étapes du procédé selon l'invention d'acquisition d'image.

L'appareil selon l'invention peut comprendre, en termes de moyen(s) matériel(s) et/ou logiciel(s), une combinaison quelconque des caractéristiques optionnelles énoncées plus haut pour le procédé selon l'invention et qui ne sont pas reprises ici par soucis de concision.

Suivant des exemples de réalisation non limitatifs, l'appareil selon l'invention peut être un appareil photo, une caméra, un Smartphone, une tablette, un ordinateur, une web-cam, etc.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple de réalisation non limitatif d'un élément optique pouvant être utilisé dans un objectif optique au sens de la présente invention ;
- la FIGURE 2 est une représentation schématique d'un exemple de réalisation non limitatif d'un module caméra au sens de la présente invention ;
- la FIGURE 3 est une représentation schématique d'un exemple de réalisation non limitatif d'une phase de caractérisation pouvant être mise en œuvre dans un procédé selon la présente invention ;
- les FIGURES 4, 5a, 5b et 5c sont des représentations schématiques d'exemples de réalisation non limitatifs d'un procédé d'acquisition d'image selon la présente invention ;
- la FIGURE 6 est une représentation schématique d'un exemple de réalisation non limitatif d'un dispositif de caractérisation d'un objectif optique ;
- la FIGURE 7 est une représentation schématique d'un exemple de réalisation non limitatif d'un appareil selon l'invention d'acquisition d'image ; et
- la FIGURE 8 est une représentation schématique d'un exemple de réalisation non limitatif d'un autre appareil selon l'invention d'acquisition d'image selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

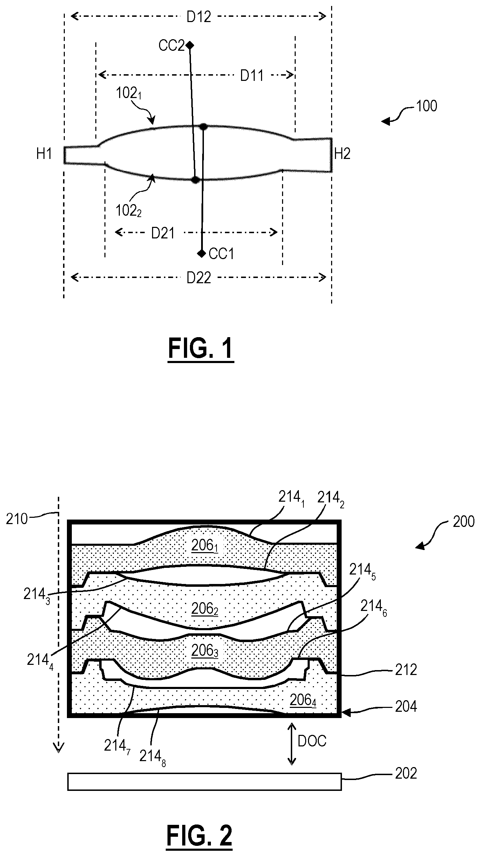

La FIGURE 1 est une représentation schématique d'un exemple de réalisation non limitatif d'un élément optique pouvant être utilisé pour fabriquer un objectif optique.

L'élément optique 100 de la FIGURE 1 peut être utilisé avec au moins un autre élément optique pour fabriquer un objectif optique. Un exemple d'objectif optique, donné à titre d'exemple non limitatif sera décrit en référence à la FIGURE 2.

L'élément optique 100 peut être une lentille, une lame, etc. Dans la suite, et sans perte de généralité, on considère que l'élément optique est une lentille.

La lentille optique 100 peut par exemple être fabriquée par moulage par injection. Un procédé par moulage par injection suit de façon générale la succession d'étapes suivantes :
- injection du polymère et remplissage du moule,
- mise sous pression,
- maintien de la pression,
- refroidissement, et
- démoulage
Les procédés de fabrication de lentille par injection, bien que courants, peuvent fluctuer et générer des erreurs sur les paramètres caractéristiques des lentilles, notamment en ce qui concerne sa géométrie.

La lentille 100 a une forme géométrique donnée. Elle comporte deux interfaces 102₁ et 102₂, ayant elles aussi, chacune, une forme géométrique donnée. Ainsi, la forme géométrique de lentille 100 est déterminée par :
- une forme géométrique de chacune des interfaces optiques 102₁ et 102₂ ;
- un centre de courbure, notées CC1 et CC2, de chacune des interfaces optiques 102₁ et 102₂ ;
- une position d'un apex, notées A1 et A2, de chacune des interfaces optiques 102₁ et 102₂ ;
- au moins une épaisseur, noté H1 et H2, de la lentille 100 le long de sa périphérie ;
- un diamètre intérieur, respectivement D11 et D21, et/ou un diamètre extérieur, respectivement D12 et D22, de chacune des interfaces 102₁ et 102₂ ;
- une concentricité ou valeur d'excentricité des interfaces 102₁ et 102₂
- une rugosité de surface de chacune des interfaces optiques 102₁ et 102₂ ;
- etc.

La valeur d'au moins un de ces paramètres géométriques peut être fournie par le fabricant. Alternativement, ou en plus, la valeur d'au moins un paramètre géométrique peut être mesurée par exemple par profilométrie optique ou mécanique. Alternativement, ou en plus, la valeur d'au moins un paramètre géométrique peut être déterminée par simulation, à partir d'une modélisation numérique de la lentille 100. Alternativement, ou en plus, la valeur d'au moins un paramètre géométrique peut être mesurée par exemple par interférométrie optique.

De plus, la lentille 100 à des caractéristiques optiques puisqu'il s'agit d'un élément optique. Elle est donc caractérisée par au moins un paramètre optique tel que par exemple :
- un indice de réfraction, notés I1 et I2, de chacune des interfaces optiques 102₁ et 102₂ ;
- un nombre d'Abbé, noté Ab,
- etc.

Une combinaison quelconque de ces paramètres individuels, et en particulier l'ensemble de ces paramètres, peut être utilisée pour modéliser numériquement l'élément optique 100.

La FIGURE 2 est une représentation schématique d'un exemple de réalisation non limitatif d'un module caméra comprenant un objectif optique et un capteur d'image au sens de la présente invention.

Le module caméra 200 comprend un capteur d'image 202. Le capteur d'image peut être tout type de capteur photosensible tel qu'un capteur CMOS (dite « CMOS Imager System» qui fournit l'acronyme CIS), ou un capteur CCD.

Le module caméra 200 comprend en outre un objectif optique 204. L'objectif optique 204 a pour fonction de focaliser une image d'une scène dans un plan image, à savoir le plan du capteur d'image 202.

Un objectif optique 204 est généralement constitué d'un empilement d'éléments optiques comprenant une combinaison quelconque d'éléments optiques tels que des lentilles, des rondelles d'espacement et d'opacification, etc.

Lors de la fabrication de l'objectif optique, chaque élément optique dudit objectif est sélectionné individuellement et empilé avec les autres éléments optiques dans un barillet d'assemblage, selon un ordre donné. L'empilement est ensuite solidarisé avec le barillet par des techniques connues, par exemple par collage.

Sur la FIGURE 2, et à titre d'exemple non limitatif seulement, l'objectif optique 204 comprend quatre lentilles 206₁-206₄ empilées, dans une direction d'empilement 210, également appelé axe Z, dans un barillet 212. Au moins deux des lentilles 206₁-206₄ peuvent être séparées entre elles d'un espace vide, appelé « air gap », ou d'une entretoise, ou rondelle, d'espacement également appelée « spacer ».

Au moins une des lentilles 206₁-206₄ peut par exemple être la lentille 100 de la FIGURE 1.

Chacune des lentilles 206₁-206₄ comporte deux interfaces, à savoir une interface, dite amont, et une interface, dite avale, dans la direction de l'empilement 210. Ainsi, la lentille 206₁ a une interface amont 214₁ et une interface avale 214₂, la lentille 206₂ a une interface amont 214₃ et une interface avale 214₄, la lentille 206₃ a une interface amont 214₅ et une interface avale 214₆ et la lentille 208₄ a une interface amont 214₇ et une interface avale 214₈.

Ainsi, pour l'objectif optique 204 de la FIGURE 2, et de manière générale pour tout objectif optique comprenant un empilement d'éléments optiques, il est possible de déterminer un jeu de données, appelé jeu géométrique, notée JG dans la suite, comprenant des données relatives à au moins un paramètre géométrique d'au moins une, et en particulier de chaque, interface optique 206ᵢ dudit empilement.

Un tel jeu géométrique JG peut comprendre des données relatives à, ou des valeurs de, l'un quelconque des paramètres géométriques suivants :
- au moins une position d'au moins une interface optique 206₁-206₄ de l'objectif 204 le long de l'axe Z ;
- au moins une valeur de décentrement d'au moins une interface optique 206₁-206₄ par rapport à l'axe Z, ou relativement à une position de centre d'une autre interface, dans le plan X-Y ; ou
- au moins une valeur d'inclinaison d'au moins une interface optique 206₁-206₄ par rapport à l'axe Z, ou relativement à l'inclinaison une autre interface ;
- au moins une valeur de topographie ou de profil de forme d'au moins une interface optique 206₁-206₄.

De manière générale, le jeu géométrique JG peut comprendre pour chaque interface optique de l'objectif optique 204 M paramètres géométriques avec M≥1 et préférentiellement M≥2. Si l'objectif optique 204 comprend N éléments optiques, chaque élément optique comportant deux interfaces, alors le jeu géométrique JG peut comprendre 2NxM paramètres et peut correspondre à une matrice comportant 2N lignes et M colonnes. Bien entendu, le jeu géométrique JG peut comprendre un même nombre de paramètres géométriques pour au moins deux interfaces optiques, ou des nombres différents de paramètres géométriques pour au moins deux interfaces optiques.

Le jeu géométrique JG peut comprendre directement les valeurs des paramètres géométriques. Ces valeurs peuvent être mesurées par interférométrie optique ou par mesure(s) confocale(s), préférentiellement depuis un côté ou une face de l'objectif optique 204, de manière à éviter de le tourner.

Le jeu géométrique de l'objectif optique 204, éventuellement avec les paramètres individuels de chaque élément optique, tels qu'une combinaison quelconque des paramètres décrits en référence à la FIGURE 1, peut être utilisés pour modéliser numériquement le module caméra dans un simulateur numérique, tel que par exemple, et sans perte de généralité le simulateur « ZEMAX ^{®} » disponible sur le marché.

De manière optionnelle, la distance, notée DOC, entre l'objectif optique 204 et le capteur d'image 202 peut être changeante, par exemple par un mécanisme de modification de focalisation ou de zoom. La valeur de cette distance DOC peut être mesurée par un capteur prévu cet effet, ou peut être fournie par le mécanisme de zoom, ou à partir d'une configuration dudit mécanisme de zoom.

De plus, la distance notée DOS, entre l'objectif optique et la scène imagée est généralement changeante d'une image à l'autre. Plus encore, au sein d'une même image des objets se trouvant dans la scène peuvent se trouver à différentes distances de l'objectif optique. Pour une image donnée, cette distance DOS, et éventuellement les distances DOS pour différentes régions du capteur optique, peu(ven)t être déterminée(s) soit par analyse de l'image captée, soit par un ou plusieurs capteurs, tels que des capteurs LIDAR.

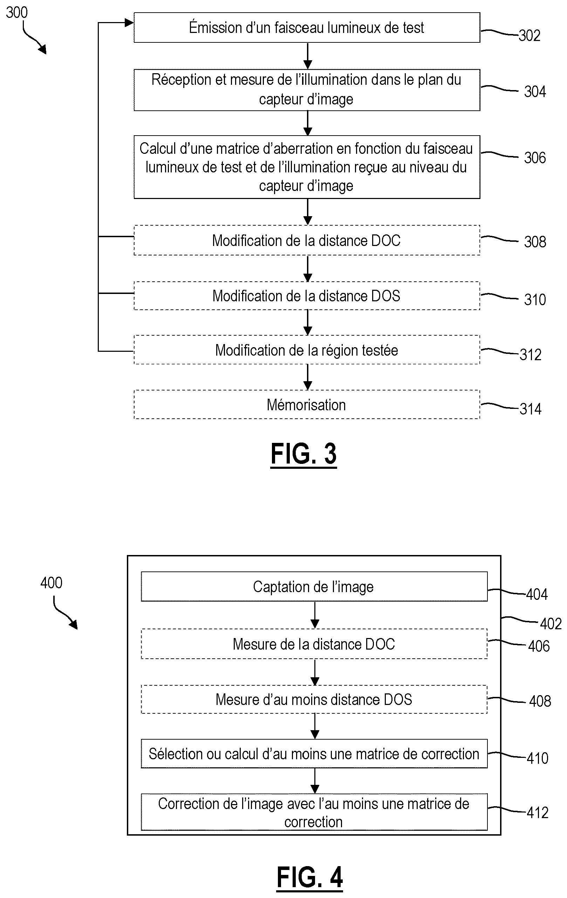

La FIGURE 3 est une représentation schématique d'un exemple de réalisation non limitatif d'une phase de caractérisation pouvant être mise en œuvre dans la présente invention.

La phase 300 de la FIGURE 3 permet de déterminer une ou plusieurs matrices d'aberration, représentative(s) des aberrations optiques introduites dans une image prise par un objectif optique, et en particulier par l'objectif optique 200 de la FIGURE 2.

La phase de caractérisation 300 peut être mise en œuvre hors de l'appareil d'acquisition d'image, c'est-à-dire avant que l'objectif optique, ou le module caméra, ne soit monté dans l'appareil d'acquisition d'image. Alternativement, la phase de caractérisation 300 peut être mise en œuvre dans l'appareil d'acquisition d'image, après que l'objectif optique, ou le module caméra, est monté dans l'appareil d'acquisition d'image. Dans ce cas, une partie ou la totalité des étapes de la phase de caractérisation est mise en œuvre dans ledit appareil d'acquisition d'image.

La phase 300 comprend une étape 302 d'émission d'un faisceau lumineux de test vers l'objectif optique, et en particulier vers le module caméra comprenant l'objectif optique et le capteur d'image. Le faisceau lumineux de test peut être décrit par une matrice de valeurs, notée MT.

Le faisceau lumineux de test traverse l'objectif optique et est reçu au niveau du capteur d'image. L'illumination ayant traversé l'objectif optique est mesurée par le capteur optique lors d'une étape 304. Cette illumination reçue au niveau du capteur comporte l'information des aberrations optiques introduites par l'objectif optique dans chaque image captée. L'illumination observée et mesurée au niveau du capteur d'image peut être décrite par une matrice de valeurs notée MTOBS.

En connaissant la matrice MT et en mesurant la matrice MTOBS, il est possible de déterminer, lors d'une étape 306, une matrice d'aberration, MA, comme étant une convolution des matrices entre les MT et et MA, telle que $MTOBS = MT * MA$

De manière optionnelle, mais particulièrement avantageuse, la matrice d'aberration peut être obtenue, individuellement pour différentes distances DOCⱼ entre l'objectif optique et le capteur d'image, avec j=1,...,J et J≥2. Dans ce cas, lors d'une étape 308, la distance DOC est modifiée, par exemple en rapprochant ou en éloignant le capteur d'image de l'objectif optique, et les étapes 302-306 sont réitérées pour chaque distance DOCⱼ.

De manière optionnelle, mais particulièrement avantageuse, la matrice d'aberration peut être obtenue, individuellement pour différentes distances DOSₖ entre l'objectif optique et le capteur d'image, avec k=1,...,K et K≥2. Dans ce cas, lors d'une étape 310, la distance DOS est modifiée, par exemple en rapprochant, ou en éloignant, la source du faisceau lumineux de test de l'objectif optique, et les étapes 302-308 sont réitérées pour chaque distance DOSₖ.

La matrice d'aberration peut être obtenue en une seule fois pour toute l'étendue du capteur d'image.

Alternativement, la matrice d'aberration peut être obtenue, individuellement pour différentes régions du capteur d'image, Rᵢ avec i=1,...,I et I≥2, correspondant chacune à un ou plusieurs pixels sur ledit capteur d'image, dans le plan du capteur d'image. Dans ce cas, lors d'une étape 312, la région de test est modifiée et les étapes 302-310 sont réitérées pour chaque région Rᵢ individuellement.

Ainsi, la phase de caractérisation 300 fournit au moins une matrice d'aberration MA. Dans la suite, et sans perte de généralité, on considère que la phase de caractérisation 300 fournit un nombre NB = I x J x K matrices d'aberrations MAᵢⱼₖ pour différentes régions Rᵢ, différentes distances DOCⱼ et différentes distances DOSₖ.

Lors d'une étape 314, optionnelle, les matrices d'aberration peuvent être mémorisées dans une base de données.

La phase 300 de la FIGURE 3 peut faire partie d'un procédé selon l'invention d'acquisition d'image, tel que les exemples de procédé qui seront décrits plus loin. Toutefois, le procédé selon l'invention d'acquisition d'image ne comprend pas forcément une telle phase de caractérisation.

Au moins une matrice d'aberrations peut être déterminée par mesure optique sur l'objectif optique réel avec un appareil de mesure optique comprenant une source de faisceau optique, et optionnellement une unité de calcul. L'appareil de mesure optique peut comprendre un appareil de mesure du MTF (pour « Modulation Tranfer Function » en anglais, ou OTF ou FTO pour « Fonction de Transfert Optique » en français), ou un appareil de mesure de PSF (pour « Point Spread Function » en anglais, ou « Fonction d'Etalement du Point »). De tels appareils sont bien connus de l'Homme du métier.

Alternativement, au moins une matrice d'aberration peut être déterminée par simulation dans un simulateur numérique sur un modèle numérique de l'objectif optique. Un modèle numérique de l'objectif optique peut être défini dans un simulateur, par exemple à partir d'une combinaison quelconque des paramètres géométriques décrits en référence à la FIGURE 2 et/ou de paramètres individuels décrits en référence à la FIGURE 1. Dans ce cas, l'objectif optique et le capteur d'image sont modélisés dans un logiciel, tel que le logiciel ZEMAX^{®}, dans lequel il est possible de simuler les fonctions MTF, OTF ou PSF, en simulant l'émission et la propagation d'un faisceau lumineux de test et en mesurant l'illumination reçue sur le capteur d'image.

La FIGURE 4 est une représentation schématique d'un exemple de réalisation non limitatif d'un procédé selon l'invention d'acquisition d'image.

Le procédé 400 de la FIGURE 4 comprend au moins une itération d'une phase 402 d'acquisition d'une image avec un module caméra, et en particulier avec le module caméra 200 de la FIGURE 2.

La phase 402 comprend une étape 404 de captation d'une image. L'image captée se présente sous la forme d'une matrice de valeurs, fournie par le capteur d'image, et notée IMₐ. La matrice IMₐ comprend des valeurs numériques pour chaque pixel du capteur. Par exemple, pour une image RGB, la matrice IMₐ comprend pour chaque pixel trois valeurs, une pour chaque couleur. L'image acquise, et donc la matrice IMₐ, comprend les aberrations optiques introduites par l'objectif optique, tel que par exemple un flou optique ou un déplacement.

De manière optionnelle, mais particulièrement avantageuse, la phase d'acquisition 402 peut comprendre une étape 406 de détermination, par mesure ou par calcul, de la distance DOC entre l'objectif optique et le capteur d'image, lors de l'acquisition de l'image. La correction de l'image captée peut alors être réalisée en sélectionnant, ou en calculant, la matrice de correction correspondant à ladite distance DOC.

De manière optionnelle, mais particulièrement avantageuse, la phase d'acquisition 402 peut comprendre une étape 408 de détermination, par mesure ou par calcul, d'au moins une distance DOS entre l'objectif optique et la scène imagée, lors de l'acquisition de l'image. En particulier, une distance DOS peut être mesurée/calculée pour chaque région Rᵢ du capteur d'image. La correction de l'image captée peut alors être réalisée en sélectionnant, ou en calculant, la ou les matrices de correction correspondant à ladite distance DOS, ou auxdites distances DOS pour chaque région Rᵢ.

Lors d'une étape 410, au moins une matrice de correction est sélectionnée, ou calculée, optionnellement en fonction des distances DOC et/ou DOS déterminées lors des étapes optionnelles 406 et 408. Lorsque la, ou chaque, matrice de correction est préalablement calculée et mémorisée dans une base de données, alors l'étape 410 réalise uniquement une sélection de la, ou de chaque, matrice de correction dans ladite base de données. Lorsque la, ou chaque, matrice de correction n'est pas préalablement calculée, alors l'étape 410 réalise un calcul à la volée de la, ou de chaque, matrice de correction.

L'image captée, et en particulier la matrice IMₐ représentant l'image captée, est corrigée, en partie ou en totalité, lors d'une étape 412. Pour ce faire, au moins certaines des valeurs de la matrice IMₐ sont corrigées en utilisant au moins une matrice de correction sélectionnée/calculée lors de l'étape 410. Dans la suite, et sans perte de généralité, on considère qu'une matrice de correction, notée MCᵢⱼₖ, est utilisée pour chaque région Rᵢ du capteur, pour la distance DOCⱼ déterminée lors de l'étape 406, et pour la distance DOSₖ déterminée lors de l'étape 408 pour ladite région Rᵢ. En notant, IM_{c} la matrice représentant l'image corrigée, la correction de l'image peut être réalisée par convolution de la matrice IMₐ avec chaque matrice de correction MCᵢⱼₖ, pour chaque région Rᵢ du capteur d'image : ${IM}_{c} = {IM}_{a} * {MC}_{ijk} , avec i = 1 , . . , I et I \geq 2$

Dans l'image corrigée ainsi obtenue les aberrations introduites par l'objectif optique sont corrigées, ou du moins atténuées.

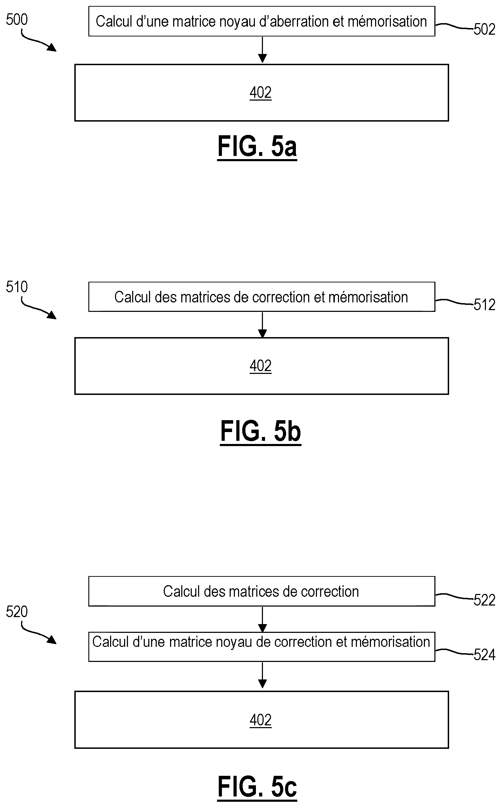

La FIGURE 5a est une représentation schématique d'un autre exemple de réalisation non limitatif d'un procédé selon l'invention.

Le procédé 500 de la FIGURE 5a comprend la phase d'acquisition 402 du procédé 400 de la FIGURE 4.

Le procédé 500 comprend en outre, avant la phase d'acquisition 402, une étape 502 de calcul d'une matrice noyau d'aberration à partir des matrices d'aberrations déterminées pour l'objectif optique. En effet, en vue de réduire les ressources de mémorisation nécessaires à la mémorisation des matrices d'aberration, il peut être avantageux de calculer une matrice noyau d'aberration qui sera ensuite utilisée pour calculer, à la volée, la matrice d'aberration pour chaque région Rᵢ du capteur d'image, optionnellement en fonction de la distance DOC et/ou de la, ou des, distance(s) DOS mesurées pour chaque image captée.

Dans ce cas, lors de l'étape 410, chaque matrice d'aberration MAᵢⱼₖ pour chaque région Rᵢ est déduite, à la volée, à partir de la matrice noyau d'aberration. Ensuite, chaque matrice d'aberration MAᵢⱼₖ est utilisée pour calculer la matrice de correction MCᵢⱼₖ pour chaque région Rᵢ du capteur d'image.

La matrice noyau d'aberration peut être déterminée telle que décrit plus haut, en utilisant une base de fonctions.

La FIGURE 5b est une représentation schématique d'un autre exemple de réalisation non limitatif d'un procédé selon l'invention.

Le procédé 510 de la FIGURE 5b comprend la phase d'acquisition 402 du procédé 400 de la FIGURE 4.

Le procédé 510 comprend en outre, avant la phase d'acquisition 402, une étape 512 de calcul et de mémorisation de toutes les matrices de correction MCᵢⱼₖ qui peuvent potentiellement être utilisées pour corriger une image lors de la phase de d'acquisition. En d'autres termes, l'étape 512 réalise un calcul, pour chaque région Rᵢ, et éventuellement pour chaque distance DOCⱼ et/ou chaque distance DOSₖ, une matrice de correction MCᵢⱼₖ à partir de la matrice d'aberration MAᵢⱼₖ déterminée lors de la phase de caractérisation. Chacune de ces matrices de correction MCᵢⱼₖ est alors mémorisée dans une base de données.

Dans ce cas, l'étape 410 de la phase d'acquisition 402 ne réalise aucun calcul de matrice de correction. Lors de cette étape 410, la base de données mémorisant les matrices de correction MCᵢⱼₖ est lue pour y sélectionner, pour chaque région Rᵢ du capteur, la matrice de correction souhaitée pour corriger l'image acquise, éventuellement pour la distance DOCⱼ et/ou la distance DOSₖ mesurée(s) pour ladite région Rᵢ.

La FIGURE 5c est une représentation schématique d'un autre exemple de réalisation non limitatif d'un procédé selon l'invention.

Le procédé 520 de la FIGURE 5c comprend la phase d'acquisition 402 du procédé 400 de la FIGURE 4.

Le procédé 520 comprend en outre, avant la phase d'acquisition 402, une étape 522 de calcul de toutes les matrices de correction MCᵢⱼₖ qui peuvent potentiellement être utilisées pour corriger une image lors de la phase de d'acquisition 402. En d'autres termes, l'étape 522 réalise un calcul, pour chaque région Rᵢ, et éventuellement pour chaque distance DOCⱼ et/ou chaque distance DOSₖ, une matrice de correction MCᵢⱼₖ à partir de la matrice d'aberration MAᵢⱼₖ déterminée lors de la phase de caractérisation.

Le procédé 520 comprend en outre, toujours avant la phase d'acquisition 402, une étape 524 de calcul d'une matrice noyau de correction à partir des matrices de correction MCᵢⱼₖ déterminées pour l'objectif optique lors de l'étape 522. En effet, en vue de réduire les ressources de mémorisation nécessaires à la mémorisation de toutes les matrices de correction MCᵢⱼₖ, il peut être avantageux de calculer une matrice noyau de correction qui sera utilisée pour calculer, à la volée, chaque matrice de correction MCᵢⱼₖ pour chaque région Rᵢ du capteur d'image, optionnellement en fonction de la distance DOC et/ou de la, ou des, distance(s) DOS mesurée(s) pour chaque image captée lors de la phase d'acquisition 402.

Dans ce cas, lors de l'étape 410 de la phase d'acquisition, chaque matrice correction pour chaque région Rᵢ est déduite, à la volée, à partir de la matrice noyau de correction, et optionnellement en fonction de la distance DOC et/ou de la, ou des, distance(s) DOS mesurée(s).

La matrice noyau de correction peut être déterminée telle que décrit plus haut, en utilisant une base de fonctions.

Dans les exemples décrits en référence aux FIGURES 5a, 5b et 5c, chacune des étapes 502, 512, 522 et 524 peut être mise en œuvre soit dans l'appareil d'imagerie réalisant la captation de l'image, c'est-à-dire l'appareil équipé du module caméra, soit hors dudit appareil d'imagerie.

Par exemple, dans le procédé 500 de la FIGURE 5a, l'étape 502 de calcul de la matrice noyau d'aberration peut être réalisée dans l'appareil d'imagerie, ou hors de l'appareil d'imagerie par exemple dans un dispositif de caractérisation de l'objectif optique, par exemple mettant en œuvre la phase de caractérisation 300 de la FIGURE 3.

Dans le procédé 510 de la FIGURE 5b, l'étape 512 de calcul des matrices de correction peut être réalisée dans l'appareil d'imagerie, ou hors de l'appareil d'imagerie par exemple dans un dispositif de caractérisation de l'objectif optique, par exemple mettant en œuvre la phase de caractérisation 300 de la FIGURE 3.

Dans le procédé 520 de la FIGURE 5c, l'étape 522 de calcul des matrices de correction, respectivement l'étape 524 de calcul de la matrice de noyau de correction, peut être réalisée dans l'appareil d'imagerie, ou hors de l'appareil d'imagerie par exemple dans un dispositif de caractérisation de l'objectif optique, par exemple mettant en œuvre la phase de caractérisation 300 de la FIGURE 3.

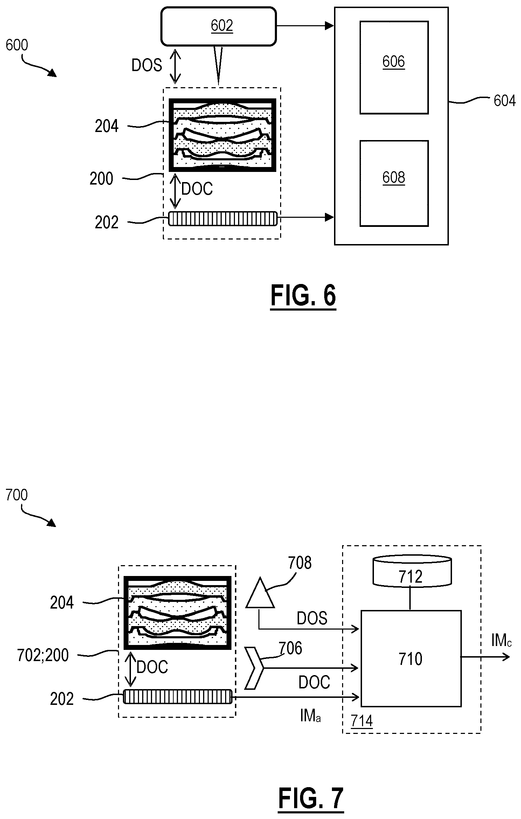

La FIGURE 6 est une représentation schématique d'un exemple de réalisation non limitatif d'un dispositif de caractérisation d'un objectif optique.

Le dispositif 600 de la FIGURE 6 peut être utilisé pour caractériser tout type d'objectif optique utilisé pour l'acquisition d'image, et plus particulièrement l'objectif 200 de la FIGURE 2.

Le dispositif 600 de la FIGURE 6 peut être utilisé pour mettre en œuvre une phase de caractérisation d'un objectif optique, et en particulier la phase de caractérisation 300 de la FIGURE 3, en vue de déterminer, au moins, des matrices d'aberration représentatives des aberrations introduites par un objectif optique dans une image captée avec ledit objectif optique.

Le dispositif 600 comprend une source 602 pour émettre un ou des faisceaux de lumineux de test en direction de l'objectif optique, et en particulier en direction du module caméra, tel que par exemple le module caméra 200 de la FIGURE 2.

Le dispositif 600 peut comprendre un mécanisme (non représenté) pour ajuster la position de la source 602 :
- dans la direction Z d'émission du faisceau lumineux de test, de sorte à ajuster la distance DOS et déterminer des matrices d'aberration pour différentes distances DOS, et/ou
- dans le plan, noté X-Y, perpendiculaire à la direction Z d'émission du faisceau lumineux de test, pour modifier la région Rᵢ pour laquelle une matrice d'aberration est déterminée.

Le dispositif 600 peut comprendre un mécanisme (non représenté) pour ajuster les positions relatives de l'objectif optique et du capteur d'image dans la direction Z, de sorte à ajuster la distance DOC entre le capteur d'image et l'objectif optique et déterminer des matrices d'aberration pour différentes distances DOC.

Le dispositif 600 peut comprendre une unité de calcul 604.

Cette unité de calcul 604 est prévue pour recevoir d'une part une matrice de valeur, notée MT, représentant le faisceau lumineux de test émis par la source 602 et d'autre part une matrice de valeur, notée MTOBS, représentant l'illumination observée par le capteur d'image pour ce faisceau lumineux de test.

L'unité de calcul 604 peut comprendre un module de calcul 606 prévu pour calculer, en fonction des matrices MT et MTOBS, une matrice d'aberration, notée MA, par exemple en utilisant la relation convolution suivante : $MTOBS = MT * MA$ Lorsque la matrice d'aberration est déterminée pour une région Rᵢ, une distance DOCⱼ, et une distance DOSₖ pour cette région Rᵢ, la relation utilisée peut être notée comme suit : ${MTOBS}_{ijk} = {MT}_{ijk} * {MA}_{ijk}$

L'unité de calcul 604 peut en outre comprendre un module de calcul 608 prévu pour calculer une matrice noyau d'aberration, par exemple en mettant en œuvre l'étape 502 du procédé 500, auquel cas cette étape 502 n'est pas mise en œuvre dans l'appareil d'imagerie.

Alternativement, ou en plus, le module de calcul 608 peut être prévu pour calculer :
- au moins une matrice de correction, par exemple en mettant en œuvre l'étape 512 du procédé 510, ou l'étape 522 du procédé 520, auquel cas cette étape n'est pas mise en œuvre dans l'appareil d'imagerie ; et
- éventuellement, au moins une matrice noyau de correction, par exemple en mettant en œuvre l'étape 524 du procédé 520, auquel cas cette étape n'est pas mise en œuvre dans l'appareil d'imagerie.

L'unité de calcul 604 peut se présenter sous une forme matérielle, tel qu'un serveur, un ordinateur, un processeur, une puce électronique, etc. Alternativement, l'unité de calcul 604 peut se présenter sous une forme logicielle, tel qu'un ou plusieurs programmes d'ordinateur. Suivant encore une autre alternative, l'unité de calcul 604 peut être formée par une combinaison quelconque d'au moins un moyen matériel et d'au moyen logiciel.

Les modules 606 et 608 peuvent être chacun un module individuel et indépendant de l'autre module. Alternativement, les modules 606 et 608 peuvent être intégrés au sein d'un unique module. Chacun des modules 606 et 608 peut se présenter sous une forme matérielle, tel qu'un serveur, un ordinateur, un processeur, une puce électronique, etc. Alternativement, chacun des modules 606 et 608 peut se présenter sous une forme logicielle, tel qu'une machine virtuelle, un ou plusieurs programmes d'ordinateur, etc. Suivant encore une autre alternative, chacun des modules 606 et 608 peut être formé par une combinaison quelconque d'au moins un moyen matériel et d'au moyen logiciel.

La FIGURE 7 est une représentation schématique d'un exemple de réalisation non limitatif d'un appareil selon l'invention d'acquisition d'image.

Le dispositif 700 de la FIGURE 7 peut être utilisé pour mettre en œuvre un procédé selon l'invention d'acquisition d'une image, et en particulier l'un quelconque des procédés 400, 500, 510 et 520 des FIGURES 4, 5a, 5b et 5c.

Le dispositif 700 comprend un module caméra 702, qui peut par exemple être le module caméra 200 de la FIGURE 2, comprenant un capteur d'image, par exemple le capteur d'image 202, et un objectif optique, par exemple l'objectif optique 204.

De manière optionnelle, le dispositif 700 peut comprendre un capteur 706 prévu pour mesurer la distance DOC entre l'objectif optique 704 et le capteur d'image 702. Un tel capteur 706 peut être un capteur capacitif, un capteur résistif ou encore un capteur optique. Ce capteur 706 fournit une valeur de la distance DOC, ou une valeur d'une grandeur électrique représentative de la distance DOC, telle que par exemple une tension, un courant, etc.

De manière optionnelle, le dispositif 700 peut comprendre un capteur 708 prévue pour mesurer la distance DOS entre l'objectif optique 204 et la scène imagée. Un tel capteur 708 peut être un capteur LIDAR par exemple. Ce capteur 708 fournit une valeur de la distance DOS, ou une valeur d'une grandeur électrique représentative de cette distance DOS, telle que par exemple une tension, un courant, etc. Préférentiellement, mais de manière nullement limitative, ce capteur 708 est prévu pour mesurer la distance DOS individuellement pour différentes régions Rᵢ du capteur d'image 202.

Le dispositif 700 comprend en outre une unité de calcul 710 configurée pour corriger l'image captée par le capteur 704, et en particulier la matrice IMₐ représentant l'image captée, et fournir une matrice, notée IM_{c}, représentant l'image corrigée, en fonction d'au moins une matrice de correction MCᵢⱼₖ.

L'unité de calcul 710 peut être une unité matérielle telle qu'un processeur ou une puce informatique. Alternativement, l'unité de calcul peut être un programme d'ordinateur ou une application.

Suivant des modes de réalisation, l'au moins une matrice de correction MCᵢⱼₖ peut être lue depuis une zone mémoire, ou une base de données, 712. Dans ce cas, l'unité de calcul 710 lit ladite au moins une matrice de correction, optionnellement en fonction de distance(s) DOC et/ou DOS mesurée(s) lors de la prise d'image.

Suivant des modes de réalisation, l'unité de calcul 710 peut en outre être configurée pour calculer, en particulier à la volée, l'au moins matrice de correction, en fonction :
- d'une matrice noyau de correction,
- d'au moins une matrice d'aberration prédéterminée, ou
- d'une matrice noyau d'aberration ;
mémorisée(s) dans la base de données 712. Dans ce cas, l'unité de calcul lit ladite au moins une matrice et calcule l'au moins une matrice de correction à partir de ladite au moins une matrice lue.

Dans l'exemple représenté, le module caméra 702 est composé de l'objectif optique 204 et du capteur d'image 202, et optionnellement des capteurs de distance 706 et 708. Le module caméra 702 peut comprendre d'autres composants que ceux représentés, tels que par exemple un mécanisme d'ajustement de la focalisation (non représenté) modifiant la distance entre le capteur d'image 704 et l'objectif optique 702.

L'unité de calcul 710, et optionnellement la base de données 712, peuvent être intégrées dans une application photo et/ou vidéo, 714, installée ou exécutée au sein d'un appareil tel qu'un Smartphone, une tablette, un ordinateur, etc.

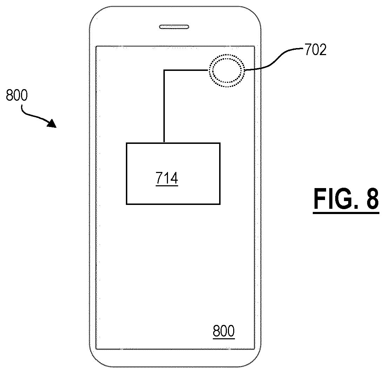

La FIGURE 8 est une représentation schématique d'un exemple de réalisation non limitatif d'un appareil selon l'invention d'acquisition d'image.

L'appareil 800 peut comprendre tous les éléments de l'appareil 700 de la FIGURE 7.

Suivant des modes de réalisation, l'appareil 800 peut être un appareil photo, une tablette, un Smartphone, un ordinateur, une caméra de surveillance, et plus généralement un module caméra destiné à être intégré dans un autre appareil, etc.

Dans l'exemple représenté, l'appareil 800 est un Smartphone comprenant un écran d'affichage 802 en face avant et le module caméra 702 débouchant sur sa face arrière, l'application 714 intégrant l'unité de calcul 710 et la base de données 712.

Bien entendu l'invention n'est pas limitée aux exemples qui viennent d'être décrits.

## Revendications

1. Procédé (400;500;510;520) d'acquisition d'image avec un appareil (700;800) comprenant un module caméra (200;702) comportant un objectif optique (204) associé à un capteur d'image (704), ledit procédé (400;500;510;520) comprenant au moins une itération d'une phase (402) d'acquisition d'une image par ledit appareil (700;800) comprenant les étapes suivantes :
- captation (404) d'une image avec ledit module caméra (200;702) ; et
- correction (412) de ladite image captée en fonction d'au moins une matrice de correction calculée, directement, ou indirectement, à partir d'au moins une matrice, dite matrice d'aberration, déterminée pour ledit objectif optique (204), et représentative d'aberrations optiques introduites par ledit objectif optique (204) dans une image.
la phase d'acquisition (402) comprend en outre une étape (408) de détermination d'une distance, DOS, entre l'objectif optique (204) et la scène ; **caractérisé en ce que** l'au moins une matrice de correction est fonction de ladite distance DOS.

2. Procédé (400;500;510;520) selon la revendication précédente, **caractérisé en ce que** la phase d'acquisition (402) d'une image comprend une étape (406) de détermination d'une distance, DOC, entre l'objectif optique (204) et le capteur d'image (202), l'au moins une matrice de correction étant fonction de ladite distance DOC.

3. Procédé (400;500;510;520) selon l'une quelconque des revendications précédentes, **caractérisé en ce qu'**il comprend une étape (410;512;522) de calcul de l'au moins une matrice de correction au sein dudit appareil (700;800).

4. Procédé (400;500;520) selon la revendication précédente, **caractérisé en ce que** l'étape de calcul (410) de l'au moins une matrice de correction est réalisée lors de la phase d'acquisition (402) de sorte que ladite au moins matrice de correction est calculée à la volée pour chaque image captée.

5. Procédé (510) selon l'une quelconque des revendications 1 à 3, **caractérisé en ce que** l'étape (512) de calcul de l'au moins une matrice de correction est réalisée préalablement à la phase d'acquisition (402) de sorte que ladite étape de calcul (512) est commune à plusieurs itérations de la phase d'acquisition d'image (402).

6. Procédé (400;500;510;520) selon l'une quelconque des revendications 3 à 5, **caractérisé en ce qu'**au moins une matrice de correction est calculée à partir de :
- au moins une matrice d'aberration ;
- au moins une matrice noyau de correction comprenant des coefficients permettant de déduire ladite au moins une matrice de correction, préalablement calculée ; ou
- d'au moins une matrice noyau d'aberration, comprenant des coefficients permettant de déduire ladite au moins une matrice de correction, et préalablement calculée.

7. Procédé (400;500;510;520) selon l'une quelconque des revendications précédentes, **caractérisé en ce qu'**il comprend en outre, préalablement à la première itération de la phase d'acquisition, une phase (300) de caractérisation comprenant une détermination de l'au moins une matrice d'aberration.

8. Procédé (400;500;510;520) selon la revendication précédente, **caractérisé en ce que** la phase de caractérisation (300) comprend une détermination de :
- plusieurs matrices d'aberration pour plusieurs régions du capteur d'image ;
- de plusieurs matrices d'aberration pour plusieurs valeurs de distance DOC ; et/ou
- de plusieurs matrices d'aberration pour plusieurs valeurs de distance DOS.

9. Procédé (400;500;510;520) selon l'une quelconque des revendications 7 ou 8, **caractérisé en ce qu'**au moins une matrice d'aberration est déterminée par mesure optique, sur l'objectif optique réel, avec un appareil de mesure optique.

10. Procédé (400;500;510;520) selon l'une quelconque des revendications 7 à 9, **caractérisé en ce qu'**au moins une matrice d'aberration est déterminée par simulation dans un simulateur numérique sur un modèle numérique de l'objectif optique.

11. Procédé (400;500;510;520) selon l'une quelconque des revendications précédentes, **caractérisé en ce qu'**au moins une matrice d'aberration est :
- une matrice, dite matrice PSF, de valeurs d'une fonction d'étalement du point (« Point Spread Function » ou « PSF » en anglais), et/ou
- une matrice, dite matrice OTF, de valeurs d'une fonction de transfert optique (« Optical Tranfert Fuction » ou « OTF » en anglais), et/ou
- une matrice de valeurs obtenues par analyse de front d'onde.

12. Procédé (500) selon l'une quelconque des revendications précédentes, **caractérisé en ce qu'**il comprend une étape (502) de calcul d'une matrice, dite matrice noyau d'aberration, comprenant des coefficients permettant de déduire au moins une matrice d'aberration.

13. Système d'acquisition d'image avec un appareil (700;800) comprenant un module caméra (702;200) comportant un objectif optique (204) associé à un capteur d'image (202), ledit système comprenant :
- un dispositif (600) de caractérisation dudit objectif optique (204) pour déterminer au moins une matrice, dite matrice d'aberration, représentative d'aberrations optiques introduites par ledit objectif optique (204) dans une image captée par ledit module caméra (702;200),
- ledit module caméra (702;200) pour capter une image, et
- une unité de calcul (710) dans ledit appareil (700;800) ;
configurés pour mettre en œuvre le procédé (400;500;510;520) selon l'une quelconque des revendications 7 à 12.

14. Appareil (700;800) d'acquisition d'une image comprenant :
- un module caméra (702;200) comprenant un objectif optique (204) associé à un capteur d'image (202), et
- une unité de calcul (710) ;
configurés pour mettre en œuvre les étapes du procédé (400;500;510;520) selon l'une quelconque des revendications 1 à 6.

## Patentansprüche

1. Verfahren (400;500;510;520) zur Bildaufnahme mit einer Einrichtung (700;800), umfassend ein Kameramodul (200;702), das ein optisches Objektiv (204) vorweist, das einem Bildsensor (704) zugeordnet ist, das Verfahren (400;500;510;520) umfassend mindestens eine Iteration einer Phase (402) der Aufnahme eines Bildes durch die Einrichtung (700;800), umfassend die folgenden Schritte:
- Erfassen (404) eines Bildes mit dem Kameramodul (200;702); und
- Korrigieren (412) des erfassten Bildes in Abhängigkeit von mindestens einer Korrekturmatrix, die direkt oder indirekt aus mindestens einer Matrix, Aberrationsmatrix genannt, berechnet wird, die für das optische Objektiv (204) bestimmt ist und optische Aberrationen abbildet, die durch das optische Objektiv (204) in ein Bild eingeführt werden,
wobei die Aufnahmephase (402) ferner einen Schritt (408) des Bestimmens einer Distanz, DOS, zwischen dem optischen Objektiv (204) und der Szene umfasst; **dadurch gekennzeichnet, dass** die mindestens eine Korrekturmatrix von der Distanz DOS abhängig ist.

2. Verfahren (400;500;510;520) nach dem vorstehenden Anspruch, **dadurch gekennzeichnet, dass** die Aufnahmephase (402) eines Bildes einen Schritt (406) des Bestimmens einer Distanz, DOC, zwischen dem optischen Objektiv (204) und dem Bildsensor (202) umfasst, wobei die mindestens eine Korrekturmatrix von der Distanz DOC abhängig ist.

3. Verfahren (400;500;510;520) nach einem der vorstehenden Ansprüche, **dadurch gekennzeichnet, dass** es einen Schritt (410;512;522) des Berechnens der mindestens einen Korrekturmatrix innerhalb der Einrichtung (700;800) umfasst.

4. Verfahren (400;500;520) nach dem vorstehenden Anspruch, **dadurch gekennzeichnet, dass** der Schritt (410) des Berechnens der mindestens einen Korrekturmatrix während der Aufnahmephase (402) umgesetzt wird, sodass die mindestens eine Korrekturmatrix für jedes erfasste Bild on-the-fly berechnet wird.

5. Verfahren (510) nach einem der Ansprüche 1 bis 3, **dadurch gekennzeichnet, dass** der Schritt (512) des Berechnens der mindestens einen Korrekturmatrix vor der Aufnahmephase (402) umgesetzt wird, sodass der Schritt (512) des Berechnens mehreren Iterationen der Bildaufnahmephase (402) gemeinsam ist.

6. Verfahren (400;500;510;520) nach einem der Ansprüche 3 bis 5, **dadurch gekennzeichnet, dass** mindestens eine Korrekturmatrix berechnet wird aus:
- mindestens einer Aberrationsmatrix;
- mindestens einer Korrekturkernmatrix, die vorab berechnet wurde, umfassend Koeffizienten, die das Ableiten der mindestens einen Korrekturmatrix ermöglichen; oder
- mindestens einer Aberrationskernmatrix, umfassend Koeffizienten, die das Ableiten der mindestens einen Korrekturmatrix ermöglichen, und die vorab berechnet wurde.

7. Verfahren (400;500;510;520) nach einem der vorstehenden Ansprüche, **dadurch gekennzeichnet, dass** es ferner vor der ersten Iteration der Aufnahmephase eine Charakterisierungsphase (300) umfasst, umfassend eine Bestimmung der mindestens einen Aberrationsmatrix.

8. Verfahren (400;500;510;520) nach dem vorstehenden Anspruch, **dadurch gekennzeichnet, dass** die Charakterisierungsphase (300) eine Bestimmung umfasst von:
- mehreren Aberrationsmatrizes für mehrere Bereiche des Bildsensors;
- mehreren Aberrationsmatrizen für mehrere Distanzwerte DOC; und/oder
- mehreren Aberrationsmatrizes für mehrere Distanzwerte DOS.

9. Verfahren (400;500;510;520) nach einem der Ansprüche 7 oder 8, **dadurch gekennzeichnet, dass** mindestens eine Aberrationsmatrix durch optische Messung an dem realen optischen Objektiv mit einer optischen Messeinrichtung bestimmt wird.

10. Verfahren (400;500;510;520) nach einem der Ansprüche 7 bis 9, **dadurch gekennzeichnet, dass** mindestens eine Aberrationsmatrix durch Simulation in einem numerischen Simulator mit einem numerischen Modell des optischen Objektivs bestimmt wird.

11. Verfahren (400;500;510;520) nach einem der vorstehenden Ansprüche, **dadurch gekennzeichnet, dass** mindestens eine Aberrationsmatrix folgendes ist:
- eine Matrix, PSF-Matrix genannt, von Werten einer Punktspreizfunktion ("Point Spread Function" oder "PSF" im Englischen), und/oder
- eine Matrix, OTF-Matrix genannt, von Werten einer optischen Übertragungsfunktion ("Optical Transfer Function" oder "OTF" im Englischen), und/oder
- eine Matrix von Werten, die durch Wellenfrontanalyse erhalten werden.

12. Verfahren (500) nach einem der vorstehenden Ansprüche, **dadurch gekennzeichnet, dass** es einen Schritt (502) des Berechnens einer Matrix, Aberrationskernmatrix genannt, umfasst, umfassend Koeffizienten, die das Ableiten mindestens einer Aberrationsmatrix ermöglichen.

13. Bildaufnahmesystem mit einer Einrichtung (700;800), umfassend ein Kameramodul (702;200), das ein optisches Objektiv (204) vorweist, das einem Bildsensor (202) zugeordnet ist, das System umfassend:
- eine Vorrichtung (600) zur Charakterisierung des optischen Objektivs (204) zum Bestimmen mindestens einer Matrix, Aberrationsmatrix genannt, die optische Aberrationen abbildet, die durch das optische Objektiv (204) in ein Bild, das durch das Kameramodul (702;200) erfasst wird, eingeführt werden,
- das Kameramodul (702;200) zum Erfassen eines Bildes, und
- eine Recheneinheit (710) in der Einrichtung (700;800);
die zum Durchführen des Verfahrens (400;500;510;520) nach einem der Ansprüche 7 bis 12 konfiguriert sind.

14. Einrichtung (700;800) zur Aufnahme eines Bildes, umfassend:
- ein Kameramodul (702;200), umfassend ein optisches Objektiv (204), das einem Bildsensor (202) zugeordnet ist, und
- eine Recheneinheit (710);
die zum Durchführen der Schritte des Verfahrens (400;500;510;520) nach einem der Ansprüche 1 bis 6 konfiguriert sind.

## Claims

1. A method (400;500;510;520) for image acquisition with an apparatus (700;800) comprising a camera module (200;702) comprising an optical lens (204) associated with an image sensor (704), said method (400;500;510;520) comprising at least one iteration of a phase (402) of image acquisition by said apparatus (700;800) comprising the following steps:
- capturing (404) an image with said camera module (200; 702); and
- correcting (412) said captured image as a function of at least one correction matrix calculated, directly or indirectly, from at least one matrix, called aberration matrix, determined for said optical lens (204), and representative of optical aberrations introduced by said optical lens (204) into an image.
the image acquisition phase (402) further comprises a step (408) of determining a distance, DOS, between the optical lens (204) and the scene, the at least one correction matrix being a function of said DOS distance.

2. The method (400;500;510;520) according to the preceding claim, **characterized in that** the image acquisition phase (402) comprises a step (406) of determining a distance, DOC, between the optical lens (204) and the image sensor (202), the at least one correction matrix being a function of said distance DOC.

3. The method (400;500;510;520) according any of the preceding claims, **characterized in that** it comprises a step (410; 512; 522) of calculating at least one correction matrix within said apparatus (700; 800).

4. The method (400;500;520) according to the preceding claim, **characterized in that** the step (410) of calculating the at least one correction matrix is carried out during the acquisition phase (402) so that said at least one correction matrix is calculated on the fly for each captured image.

5. The method (510) according to any one of claims 1 to 3, **characterized in that** the step (512) of calculating the at least one correction matrix is performed prior to the acquisition phase (402) so that said calculating step (512) is common to multiple iterations of the image acquisition phase (402).

6. The method (400;500;510;520) according to any one of claims 3 to 5, **characterized in that** at least one correction matrix is calculated from:
- at least one aberration matrix;
- at least one previously calculated correction kernel matrix comprising coefficients for deducing said at least one correction matrix; or
- at least one previously calculated aberration kernel matrix, comprising coefficients enabling said at least one correction matrix to be deduced.

7. The method (400;500;510;520) according to any of the preceding claims, **characterized in that** it further comprises, prior to the first iteration of the acquisition phase, a characterization phase (300) comprising a determination of at least one aberration matrix.

8. The method (400;500;510;520) according to the preceding claim, **characterized in that** the characterization phase (300) comprises determining:
- multiple aberration matrices for multiple regions of the image sensor;
- multiple aberration matrices for multiple DOC distance values; and/or
- multiple aberration matrices for multiple DOS distance values.

9. The method (400;500;510;520) according to any one of claims 7 or 8, **characterized in that** at least one aberration matrix is determined by optical measurement, on the actual optical lens, with an optical measuring apparatus.

10. The method (400;500;510;520) according to any one of claims 7 to 9, **characterized in that** at least one aberration matrix is determined by simulation in a digital simulator on a digital model of the optical lens.

11. The method (400;500;510;520) according to any one of the preceding claims, **characterized in that** at least one aberration matrix is:
- a matrix, called PSF matrix, of Point Spread Function (PSF) values, and/or
- a matrix, called OTF matrix, of Optical Transfer Function (OTF) values, and/or
- a matrix of values obtained by wavefront analysis.

12. The method (500) according to any one of the preceding claims, **characterized in that** it comprises a step (502) of calculating a matrix, called aberration kernel matrix, comprising coefficients enabling at least one aberration matrix to be deduced.

13. An image acquisition system with a device (700;800) comprising a camera module (702;200) having an optical lens (204) associated with an image sensor (202), said system comprising:
- a device (600) for characterizing said optical lens (204) to determine at least one matrix, called aberration matrix, representative of optical aberrations introduced by said optical lens (204) into an image captured by said camera module (702;200),
- said camera module (702;200) for capturing an image, and
- a calculating unit (710) in said apparatus (700;800);
configured to implement the method (400;500;510;520) according to any one of claims 7 to 12.

14. An image acquisition apparatus (700;800) comprising:
- a camera module (702;200) comprising an optical lens (204) associated with an image sensor (202), and
- a calculating unit (710);
configured to implement the steps of the method (400;500;510;520) according to any one of claims 1 to 6.
